Europäisches Patentamt

European Patent Office

Office européen des brevets

(19)

(11) Publication number: **0 181 735**
**A1**

# EUROPEAN PATENT APPLICATION

(12)

(21) Application number: 85307846.7

(22) Date of filing: 30.10.85

(51) Int. Cl.⁴: **C 08 G 81/02**
C 08 K 5/54, C 08 L 9/02
//(C08L9/02, 57:00)

(30) Priority: 01.11.84 GB 8427615

(43) Date of publication of application:
21.05.86 Bulletin 86/21

(84) Designated Contracting States:
AT BE CH DE FR GB IT LI LU NL SE

(71) Applicant: BP Chemicals Limited
Belgrave House 76 Buckingham Palace Road
London, SW1W 0SU(GB)

(72) Inventor: Umpleby, Jeffrey David
8 Chemin du Gué
F-01210 Ferney-Voltaire(FR)

(74) Representative: Denbigh, Keith Warwick et al,
c/o The British Petroleum Company plc Patents Division
Chertsey Road
Sunbury-on-Thames Middlesex, TW16 7LN(GB)

(54) **Crosslinkable elastomeric materials.**

(57) A process for the production of a cross linkable thermo-plastic elastomeric material comprises blending together under conditions which promote graft copolymerisation components comprising (A) a nitrile rubber component and (B) a thermoplastic organic polymer component comprising, for example, ethylene/alkyl (meth)acrylate wherein the thermoplastic organic component (B) has pendant silane groups bearing hydrolysable functions or, simultaneously with, or subsequent to, the blending/graft compolymerisation, pendant silane substituents are introduced into the blend. The cross linkable thermoplastic elastomeric material of the present invention can be used to manufacture articles by thermoforming techniques.

1

## Crosslinkable Elastomeric Materials

The present invention relates to crosslinkable thermoplastic elastomeric materials and to a process for producing such materials.

Thermoplastic elastomeric materials are well known in the prior art as elastomeric materials which are capable of being thermoformed into useful articles. It is also known that articles made from such materials can be crosslinked to form articles having improved properties (e.g. improved high temperature dimensional stability) by the action of vulcanising agents such as sulphur or organic peroxides. Curable i.e. crosslinkable compositions of this type are described for example in GB-A-2028837.

In the field of conventional thermoplastic polymers (i.e. non-elastomeric polymers) it is known that certain of these polymers, for example, polyolefins polyvinyl chloride and ethylene/unsaturated ester copolymers can be rendered crosslinkable by incorporating hydrolysable silane groups into the molecular structure of the polymer (e.g. by copolymerisation, grafting or transesterification techniques). Crosslinking of the produced silane-modified material is achieved by exposing the final thermoformed article to a hydrolysing agent, e.g. water, preferably in the presence of a silanol condensation catalyst. Crosslinkable materials of this type are described, for example, in GB-A-2028831, GB-A-2039513, GB-A-1415194, GB-A-1357549, GB-A-1234034 and GB-A-1286460.

It is an object of the present invention to provide a process for manufacturing crosslinkable silane modified thermoplastic elastomeric material having improved properties.

Accordingly the present invention provides a process for the production of a crosslinkable thermoplastic elastomeric material comprising blending together under conditions which promote graft copolymerisation components comprising

(A)  a nitrile rubber component and

(B)  a thermoplastic organic polymer component characterised in that:

(1)  the thermoplastic organic polymer component (B) has pendant silane groups bearing hydroylsable functions or

(2)  simultaneously with, or subsequent to, the blending/graft copolymerisation, an unsaturated silane compound bearing hydrolysable functions is grafted into the blend or

(3)  in the case that thermoplastic organic component (B) can be a copolymer containing polymerised units of (meth) acrylic acid or alkyl(meth)acrylate, simultaneously with or subsequent to the blending/graft copolymerisation a silane compound having the general formula $X - (CH_2)_a - Si (Y)_3$ is reacted therewith to introduce pendant silane substitutents into the thermoplastic organic component B, or

(4)  in the case that the thermoplastic organic component (B) can be a copolymer containing polymerised units of vinyl alcohol or vinyl carboxylate, simultaneously with or subsequent to the blending/graft copolymerisation a silane compound having the general formula $Z - (CH_2)_a - Si (Y)_3$ is reacted therewith to introduce pendant silane substituents into the thermoplastic organic component (B),

wherein X is OH, SH, $NH_2$, or R-COO-;

R is 1-18C alkyl or $CH_2 = C(R^1)-$; $R^1$ is H or 1-18C alkyl;

a = 1-18; and each Y is independently H, 1-18C hydrocarbyl, 1-18C alkoxy or 1-18C alkoxyalkoxy provided that at least one of the Y groups is the alkoxy or alkoxyalkoxy group,

and wherein Z is $R^2OOC-$, $R^2$ being H or 1-18C alkyl.

The present invention further provides a crosslinkable elastomeric thermoplastic material comprising a graft copolymer of (A) a nitrile rubber and (B) a thermoplastic organic polymer characterised in that the units of A and/or B in the graft copolymer have pendant silane groups bearing hydrolysable functions.

Nitrile rubbers are well known in the art and are copolymers of a diene and an unsaturated nitrile for example, isoprene/acrylonitrile copolymer and butadiene/acrylonitrile copolymer. In the present invention a preferred nitrile rubber is butadiene/acrylonitrile copolymer. Preferably the nitrile rubber, e.g. butadiene/acrylonitrile copolymer, has an acrylonitrile content of from 20 to 45% by weight.

The thermoplastic organic polymer component employed in the process of the present invention can be a thermoplastic organic polymer modified by the presence of pendant silane groups or can be an unmodified thermoplastic organic polymer.

Examples of unmodified thermoplastic organic polymers suitable for use in the process of the present invention are thermoplastic polymers or copolymers of one or more of olefins, vinyl chloride, vinyl ethers or unsaturated esters. Examples of suitable unmodified thermoplastic organic polymers are polyethylene, polypropylene, ethylene/hydrocarbon copolymers (e.g. LLDPE), ethylene/alkyl acrylate or methacrylate copolymers, ethylene/vinyl acetate copolymers, hydrolysed or partially hydrolysed ethylene/vinyl acetate copolymers and ethylene/vinyl ether copolymers, or blends of two or more of these organic polymers. Copolymers of ethylene with an alkyl(meth)acrylate are preferred. Particularly preferred are copolymers of ethylene with an alkyl acrylate or methacrylate wherein the alkyl group contains from 1 to 4 carbon atoms. Preferably such ethylene/alkyl(meth)acrylate copolymers contain from 75 to 95% by weight (based on copolymer) of ethylene.

Thermoplastic organic polymers modified by the presence of pendant silane groups bearing hydrolysable functions are well-known in the art and they can be prepared, for example, by copolymerisation, silane-grafting or transesterification techniques (carried out prior to the blending and grafting of A with B). For example, a thermoplastic organic polymer component having pendant silane groups can be prepared by copolymerising an unsaturated monomer, for example ethylene, with an unsaturated silane compound having hydrolysable functions in the presence of a free radical initiator or a Ziegler catalyst. Such copolymerisation techniques are described for example in GB-A-2028831, GB-A-2039513 and GB-A-1415194. Methods for making thermoplastic organic polymer components by the silane-grafting technique are disclosed, for example, in GB-A-1357549, GB-A-1234034 and GB-A-1286460. The silane-graft polymerisation method forms the basis of the well-known "SIOPLAS" (RTM) commercial method for making crosslinkable thermoplastic polymers. A method for making thermoplastic organic polymer components by transesterification is described in EP-A-4752.

The ratio of nitrile rubber component to the thermoplastic organic polymer component employed in the process of the present invention (or present as units thereof in the thermoplastic elastomeric material) is preferably from is preferably 1:20 to 10:1, most preferably 1:4 to 4:1 parts by weight based on the total weight of nitrile rubber (A) and thermoplastic organic polymer (B).

The blending of the nitrile rubber component with the thermoplastic organic polymer component is suitably carried out in the presence of a free radical initiator to promote grafting using, for example an azo-compound or an organic peroxide capable of generating free radicals under the graft copolymerisation conditions. Examples of suitable free radical initiators are azo-bisisobutyronitrile, dicumyl peroxide, 1,1-di-tertiarybutylperoxy-3,3,5-trimethyl cyclohexane, ditertiarybutyl peroxide, 2,5-dimethyl-2,5-bis(tertiary butyl peroxy)hexane, tertiarybutyl cumyl peroxide, bis(tertiarybutyl peroxy isopropyl)benzene, tertiary butyl peroxybenzoate and 4,4-ditertiarybutyl peroxy n-butyl valerate. The free radical initiator can be supported on an inert carrier if desired, for example, precipitated calcium carbonate or silica. The quantity of initiator employed is suitably 0.05 to 4.0 wt%, preferably 0.1 to 3.0wt% based on the weight of A plus B.

The graft copolymerisation of the nitrile rubber component A and the thermoplastic copolymer component B is suitably carried out at a temperature above the melting temperature of A and B. Generally temperatures in the range 110 to 210 °C are found satisfactory.

The unsaturated silane compound employed either in the preparation of the silane modified thermoplastic organic polymer or in the alternative embodiment (2) in the process of the present invention is preferably a compound having the general formula $R^1SiR^2_mY_{3-m}$ wherein $R^1$ represents an ethylenically unsaturated hydrocarbyl or hydrocarbyloxy group: $R^2$ represents an aliphatic saturated hydrocarbyl group; Y represents the hydrolysable organic group (for example Y can be halogen or alkoxyl); and m represents zero, 1 or 2. Examples of preferred unsaturated silane compounds are vinyl trimethoxy silane, vinyl tris(methoxyethoxy) silane, vinyltriethoxy silane and vinyltriacetoxy silane. One or more such silanes can be employed if desired.

The quantity of unsaturated silane compound employed in the preparation of the silane modified thermoplastic organic polymer or in the alternative embodiment (2) of the present invention is suitably sufficient to provide a concentration of 0.05 to 10 weight %, preferably 0.5 to 5 weight % of calculated as weight of silane monomer employed per 100 parts by weight of A plus B.

In embodiment (2) of the process of the present invention the unsaturated silane compound having hydrolysable groups can be grafted subsequent to the blending/graft copolymerisation of the nitrile rubber with the thermoplastic organic polymer or can be grafted "in situ" (simultaneously) during the blending/graft copolymerisation process. In the case that the grafting of the unsaturated silane is carried out "in situ", the free radical initiator(s) employed in the graft copolymerisation are generally found suitable for the silane grafting also. When the silane grafting is carried out as a subsequent step, the same (chemically) or different initiators can be employed. It is preferred to carry out the graft copolymerisation of A and B, and the grafting of the unsaturated silane compound simultaneously i.e. "in situ".

The graft copolymerisation of the nitrile rubber A with the thermoplastic organic polymer and the simultaneous or subsequent grafting of the unsaturated silane compound can be carried out using conventional melt blending or extrusion apparatus if desired. For example the components can be mixed in a rubber mill or mixer or a screw extruder until the desired grafting has been achieved. For example, the grafting conditions (e.g. quantity of peroxides, temperature and time) are preferably such that the final crosslinkable thermoplastic elastomeric material has a high load melt index (BS ISO 1133 - 1981 (E) Condition 7) in the range 0.5 to 50 grammes per 10 minutes (21.6kg load/190°C).

The crosslinkable thermoplastic elastomeric material of the present invention can contain additives for example antioxidants, fillers (eg carbon black), metal deactivators, lubricants, plasticisers, stabilisers, water-tree inhibitors, flame retardants or pigments as desired. Additives of this type are conventionally incorporated either directly or by a masterbatching technique. The material can also be blended with thermoplastics, for example, polyethylene (low, medium or high density), linear low density polyethylene, polypropylene, ethylene/vinyl acetate copolymer or ethylene/ethylacrylate copolymers.

A further embodiment of the present invention provides a crosslinkable composition comprising the crosslinkable thermoplastic elastomeric material hereinbefore described together with a silanol condensation catalyst.

The silanol condensation catalyst employed in the composition of the present invention can be any such catalyst known in the art for crosslinking silyl modified polymers. Examples of suitable classes of silanol condensation catalysts are organic and inorganic acids and alkalis, and metal compounds, for example complexes or carboxylates of lead, cobalt, iron, nickel, zinc or tin. Examples of suitable silanol condensation catalyst are dibutyltin dilaurate, dibutyltin diacetate dibutyltin dioctoate, stannous acetate, stannous caprylate, lead naphthenate, zinc caprylate, cobalt naphthenate;   ethylamines, dibutylamine, hexylamines, pyridine; inorganic acids such as sulfuric acid and hydrochloric acid; and organic acids such as toluenesulfonic acid, acetic acid, stearic acid and maleic acid.  Carboxylates of tin are preferred. Particularly preferred silanol condensation catalysts are dialkyl tin dicarboxylates, for example dibutyl tin dilaurate, dibutyl tin dipalmitate, dibutyl tin distearate, dioctyl tin dilaurate and dibutyl tin maleate.

The quantity of silanol condensation catalyst employed in this embodiment of the present invention is suitably in the range 0.001 and 3.0 moles, preferably in the range 0.003 to 0.05 moles per mole of silyl units in the crosslinkable polymer.

The silanol condensation catalyst can be incorporated into the composition by conventional blending or masterbatching techniques. Alternatively, it is possible to incorporate the silanol condensation catalyst at an earlier stage, for example during the preparation of the graft copolymer of the nitrile rubber/thermoplastic organic polymer or during the silane grafting stage.

Generally speaking, the quantity of the silanol condensation catalyst to be blended into the composition is in the range of 0.001 to 10 per cent by weight, preferably 0.01 to 5 per cent by weight, particularly preferably 0.03 to 3 per cent by weight, relative to the quantity of crosslinkable thermoplastic elastomeric material.

Another method suitable for crosslinking articles manufactured from the crosslinkable thermoplastic elastomeric material of the present invention is to contact the article with a solution or slurry of silanol condensation catalyst.

The crosslinkable thermoplastic elastomeric material of the present invention can be crosslinked using the techniques known in relation to the crosslinking of silane modified polyethylenes. These techniques generally involve exposing the material to water, moist gas or steam in the presence of silanol condensation catalyst. Techniques of this type are described in GB-A-1357549, GB-A-1234034 and GB-A-1286460.

The crosslinkable thermoplastic elastomeric material of the present invention can be used to manufacture articles by conventional thermoforming techniques, for example, blow moulding, extrusion, injection moulding, film-blowing, calendering, rotomoulding and extrusion-coating. The material is particularly preferred for wire and cable coating applications and for automative applications where grease and oil resistance are important. The invention is illustrated in the following Examples.

Example 1

A crosslinkable thermoplastic elastomeric material was prepared as follows:

A laboratory 3 litre Banbury internal mixer was preheated to 65°C. The Banbury speed was set to 50rpm and the ram pressure to $2kg/cm^2$. 1850 g of Breon (RTM) N36 C35 (made by BP Chemicals) nitrile rubber was charged, the ram dropped onto it and the speed increased to 100 rpm. After 30 seconds the following ingredients were added.

| | |
|---|---|
| Dicup. 40KE | 66g |
| (Dicumyl peroxide 40% | |
| in keiselguhr) | |
| | |
| Flectol H. (antioxidant) | 30g |
| (Polyvinyl trimethyl dihydro | |
| quinoline) | |
| | |
| Dyna Silan VTMO EO | 45g |
| (Vinyl tri(methoxy ethoxy) | |
| silane) ex Dynamit Nobel | |
| | |
| Ethylene/ethyl acrylate copolymer | 1200g |
| (DPDM6169) ex BP Chemicals | |

At time 90 seconds the ram was dropped onto the charge. After a total of 8½ minutes mixing the material was dumped. The temperature of the material was measured as 191°C with a needle pyrometer. The minimum current observed on the machines' ammeter was 42 amps which rose to 62 amps during the crosslinking reaction. A 1.5mm plaque was compression moulded from the material at 180°C and then immersed in water containing 0.5wt% dibutyl tin dilaurate (silanol condensation catalyst) at 70°C for 16 hours. The product was tested as follows:

| | | |
|---|---|---|
| IEC 502/540 Heat Elongation 150°C C/20N/15 min | – | 32% |
| IEC 502/540 Hot Set | – | 0% |
| IEC 502/540 Tensile stress at break (MPA) | – | 6.4 |
| IEC 502/540 Elongation at break | – | 320% |

A similar plaque which was not crosslinked in water/dibutyl tin dilaurate broke under heat elongation after 1 minute.

Examples 2 - 5

An intermediate compound (Compound 1) of the formulation shown in Table 1 was prepared. Compound 1 was then extruded with varying amounts of mixtures of vinyl trimethoxy silane (VTMS) (Wacker Chemie), dicumyl peroxide (DICUP: Hercules) and dibutyl tin dilaurate (DBTL) (Akzo Chemie) as shown in Table 2, under conditions promoting grafting of the NBR (nitrile rubber) to the thermoplastic (polyethylene) and promoting grafting of the unsaturated silane to the polymeric material.

The blends as described in Table 2, were fed into the hopper of a Gottfert extruder equipped with a 25 mm screw having L:D of 23:1 and a 5 cm slot-casting die having 3 mm die gap to produce an extruded tape. The die temperature was 210°C and the screw speed was 30 RPM. The extrudate was collected on a conveyor belt moving at a rate such that the tape thickness was maintained at $1.5 \pm 0.1$ mm. The extruded tape was cured by immersion in a water bath thermostated at 80°C.

Samples of the crosslinked extruded tapes were subjected to heat elongation testing according to IEC 540 (200°C, 20 g/mm$^2$, 15 minutes). The heat elongation figures are recorded in Table 2 for tapes cured for 3 hours.

**0181735**

## Table 1

| Component | wt% | Supplier |
|---|---|---|
| Polyethylene LL104AA | 35.0 | BP Chemicals |
| Levapren 450 | 28.3 | Bayer AG |
| NBR Breon N36/C35 | 3.1 | BP Chemicals |
| Carbon Black P Grade | 31.8 | Phillips |
| Antioxidants | 1.8 | Bayer AG |

## Table 2

| Component | Parts by weight | | | | |
|---|---|---|---|---|---|
| | Control | Ex 2 | Ex 3 | Ex 4 | Ex 5 |
| Compound 1 | 100 | 100 | 100 | 100 | 100 |
| VTMS | – | 0.89 | 1.07 | 1.25 | – |
| DICUP | – | 0.825 | 0.10 | 0.16 | 0.16 |
| DBTL | – | 0.025 | 0.03 | 0.038 | – |
| Properties after 3 hours in water at 80°C | Control | Ex 2 | Ex 3 | Ex 4 | Ex 5 |
| % Heat Elongation (200°C/20N/15min) | Fail | 120 | 40 | 30 | Fail |
| Tensile Stress at Break (MPa) | 10.9 | – | 9.9 | 12.2 | 11.1 |
| Elongation at Break (%) | 400 | – | 340 | 310 | 380 |

Claims:

1. A process for the production of a crosslinkable thermoplastic elastomeric material comprising blending together under conditions which promote graft copolymerisation components comprising

(A) a nitrile rubber component and

(B) a thermoplastic organic polymer component characterised in that:

(1) the thermoplastic organic polymer component (B) has pendant silane groups bearing hydrolysable functions or

(2) simultaneously with, or subsequent to, the blending/graft copolymerisation, an unsaturated silane compound bearing hydrolysable functions is grafted into the blend or

(3) in the case that thermoplastic organic component (B) can be a copolymer containing polymerised units of (meth) acrylic acid or alkyl(meth)acrylate, simultaneously with or subsequent to the blending/graft copolymerisation a silane compound having the general formula $X - (CH_2)_a - Si (Y)_3$ is reacted therewith to introduce pendant silane substitutents into the thermoplastic organic component B, or

(4) in the case that the thermoplastic organic component (B) can be a copolymer containing polymerised units of vinyl alcohol or vinyl carboxylate, simultaneously with or subsequent to the blending/graft copolymerisation a silane compound having the general formula $Z - (CH_2)_a - Si (Y)_3$ is reacted therewith to introduce pendant silane substituents into the thermoplastic organic component (B),

wherein X is OH, SH, NH$_2$, or R-COO-;

R is 1-18C alkyl or CH$_2$ = C(R$^1$)-; R$^1$ is H or 1-18C alkyl;

a = 1-18; and each Y is independently H, 1-18C hydrocarbyl, 1-18C alkoxy or 1-18C alkoxyalkoxy provided that at least one of the Y groups is the alkoxy or alkoxyalkoxy group,

and wherein Z is R$^2$OOC-, R$^2$ being H or 1-18C·alkyl.

2. A process as claimed in Claim 1 wherein the nitrile rubber is a copolymer of butadiene and acrylonitrile.

3. A process as claimed in Claim 1 or Claim 2 wherein the thermoplastic organic polymer component (B) comprises one or more of polyethylene, propylene, ethylene/hydrocarbon copolymers, ethylene/ alkyl acrylate or methacrylate copolymer ethylene/vinyl acetate copolymer and ethylene/vinyl ether copolymer.

4. A process as claimed in Claim 3 wherein the thermoplastic organic polymer component (B) comprises ethylene/alkyl acrylate or methacrylate copolymer wherein the alkyl group contains 1 to 4 carbon atoms.

5. A process as claimed in any one of the preceding claims wherein simultaneously with, or subsequent to, the blending/graft copolymerisation, an unsaturated silane compound bearing hydrolysable functions is grafted into the blend, characterised in that the unsaturated silane compound has the general formula R$^1$SiR$^2_m$Y$_{3-m}$ wherein R$^1$ represents an ethylenically unsaturated hydrocarbyl or hydrocarbyloxy group; R$^2$ represents an aliphatic saturated hydrocarbyl group; Y represents the hydrolysable organic group; and m represents zero, 1 or 2.

6. A process as claimed in Claim 5 wherein the unsaturated silane compound is selected from one or more of vinyl trimethoxy silane, vinyl tris(methoxyethyoxy)silane, vinyltriethyoxy silane and vinyl triacetoxy silane.

7. A process as claimed in any one of the preceding claims wherein the blending of the nitrile rubber component (A) with the thermoplastic component (B) is carried out in the presence of an organic peroxide capable of generating free radicals under the graft copolymerisation conditions.

8. A process as claimed in any one of the preceding claims wherein a silanol condensation catalyst is incorporated into the crosslinkable thermoplastic elastomeric material.

9. A process as claimed in Claim 8 wherein the quantity of silanol condensation catalyst is in the range 0.01 to 5 per cent by weight relative to the quantity of the crosslinkable thermoplastic elastomeric material.

10. Articles manufactured by thermoforming the crosslinkable thermoplastic elastomeric material prepared in accordance with any one of claims 1-9.

# EUROPEAN SEARCH REPORT

EP 85 30 7846

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 036 279 (MONSANTO) <br> * Page 3, lines 8-12 * | 1 | C 08 G 81/02 <br> C 08 K 5/54 <br> C 08 L 9/02 // <br> (C 08 L 9/02 <br> C 08 L 57:00 ) |
| A | GB-A-2 002 395 (KABEL- UND METALLWERKE GUTTEHOFFNUNGSHUTTE) <br> * Title page, abstract * | 1 | |
| A | FR-A-1 577 875 (MIDLAND SILICONES) <br> * Claim 1 * & GB - A - 1 234 034 (Cat. D) | 1 | |
| A | FR-A-2 430 432 (MITSUBISHI) <br> * Claim 1 * & GB - A - 2 028 831 (Cat. D) | 1 | |

| TECHNICAL FIELDS SEARCHED (Int. Cl.4) |
|---|
| C 08 L <br> C 08 G <br> C 08 K |

The present search report has been drawn up for all claims

| Place of search | Date of completion of the search | Examiner |
|---|---|---|
| THE HAGUE | 07-02-1986 | VAN HUMBEECK F.W.C. |